# EUROPÄISCHE PATENTSCHRIFT

(11) **EP 1 044 852 B1**
(45) Veröffentlichungstag und Bekanntmachung des Hinweises auf die Patenterteilung: **15.07.2009**
(21) Anmeldenummer: 00250116.1
(22) Anmeldetag: 05.04.2000
(51) Int. Cl.: B60R 16/02, H02J 7/34

(54) **Bordnetz für Kraftfahrzeuge**
Power supply network for vehicles
Réseau de bord pour véhicules

(30) Priorität: 16.04.1999 DE 19917294
(43) Veröffentlichungstag der Anmeldung: 18.10.2000
(73) Patentinhaber: Volkswagen Aktiengesellschaft, 38436 Wolfsburg (DE)
(72) Erfinder: Rennert, Ingo, 38539 Müden/Aller (DE); Dierker, Uwe, 38550 Isenbüttel (DE)
(74) Vertreter: Patentanwälte Bressel und Partner

(56) Entgegenhaltungen:
- EP-A- 0 403 051
- WO-A-98/39565
- DE-A- 4 028 242
- US-A- 5 642 696

## Beschreibung

Die Erfindung betrifft ein Bordnetz für Kraftfahrzeuge gemäß dem Oberbegriff des Patentanspruchs 1.

Bei bekannten Bordnetzen stellt die Batterie primär die Startenergie zur Verfügung und versorgt das Bordnetz bei inaktivem Generator mit elektrischer Energie. Bei aktivem Generator wird dann die Batterie durch den Generator geladen. Die Batterie hat bei aktivem Generator darüber hinaus die Funktion, die Bordnetzspannung zu glätten. Dabei müssen geeignete Maßnahmen getroffen werden, um eine Zerstörung der Batterie zu verhindern.

Überwiegend werden zur Zeit Blei-Batterien in Bordnetzen für Kraftfahrzeuge eingesetzt, die hinsichtlich einer Überladung relativ unempfindlich sind. Bei höheren Betriebstemperaturen nimmt jedoch die zulässige Ladespannung ab. Zum Schutz der Batterie wird daher die Generatorspannung mittels eines Temperaturreglers bei höheren Betriebstemperaturen heruntergeregelt, so daß entsprechend auch nur noch eine reduzierte Bordnetzspannung für die elektrischen Verbraucher zur Verfügung steht

In jüngster Zeit werden Überlegungen angestellt, die bekannten Blei-Batterien durch Lithium-Ionen-Batterien zu ersetzen, deren Gewicht im Verhältnis zu Blei-Batterien erheblich geringer ist. Nachteilig an den bekannten Lithium-lonen-Batterien ist, daß diese bei einer Überladung durch den Generator zerstört werden.

Aus der DE 196 01 241 A1 ist eine Motorstartanlage für ein Kraftfahrzeug bekannt, die einen Starter, einen parallel zur Bleibatterie verbundenen elektrischen Zweischichtkondensator, einen Startschalter und eine Steuerschaltung zum Steuern von Strom zum Starter aufweist. Der elektrische Zweischichtkondensator wird durch die Bleibatterie geladen und entlädt einen großen Strom zum Starter, wenn ein Motor gestartet wird. Gemäß dem Aufbau der Steuerschaltung kann vom elektrischen Zweischichtkondensator entladener Strom derart gesteuert werden, daß Beschädigungen von Schaltern in der Motorstartanlage verringert werden. Durch Verwendung des elektrischen Zweischichtkondensators für die Motorstartanlage läßt sich nicht nur die Belastung der Bleibatterie beim Motorstart verringern, sondern es kann auch das Startvermögen des Motors verbessert werden

Aus der WO 98/39565 A ist ein Bordnetz gemäß des Oberbegriffes des Anspruchs 1 für einen Verbrennungsmotor bekannt, mit einem elektrischen Starter, einem elektrischen Kurzzeitspeicher, insbesondere einem Kondensatorspeicher, der nach Aufladung zum Speisen des Starters dient, einem elektrischen Langzeitspeicher und einer Koppelschaltung, die beim Starten eine gleichzeitige Energieentnahme aus dem Kurzzeitspeicher und dem Langzeitspeicher erlaubt, wobei der Anteil der dem Langzeitspeicher und/oder dem Kurzzeitspeicher entnommenen Energie und/oder Leistung aktiv steuerbar ist.

Der Erfindung liegt daher das technische Problem zugrunde, ein Bordnetz für ein Kraftfahrzeug zu schaffen, bei dem eine Zerstörung der Batterie zuverlässig vermieden wird, ohne die Leistungsfähigkeit des Bordnetzes zu reduzieren.

Die Lösung des technischen Problems ergibt sich durch die Merkmale des Patentanspruchs 1. Weitere vorteilhafte Ausgestaltungen der Erfindung ergeben sich aus den Unteransprüchen.

Durch die Anordnung eines dynamischen Energiespeichers parallel zwischen Batterie und Generator, sowie eines steuerbaren Schalters zwischen Batterie und dynamischem Energiespeicher, der entweder in Abhängigkeit vom Ladezustand der Batterie und/oder von der Betriebstemperatur betätigbar ist, werden gleichzeitig mehrere Vorteile erreicht. Durch den Schalter kann die Batterie immer dann vom Bordnetz getrennt werden, wenn ein weiteres Verbleiben im Bordnetz deren Zerstörung zur Folge hätte. Bei einer Lithium-lonen-Batterie wäre dies immer dann der Fall, wenn die Lithium-lonen-Batterie voll geladen ist. Bei einer Bleibatterie könnte dies mit der zusätzlichen Bedingung der Betriebstemperatur gekoppelt werden. In diesem Fall kann dann auf eine Temperaturregelung der Generatorspannung verzichtet werden, so dass dann dem Bordnetz auch bei höheren Betriebstemperaturen die volle Generatorspannung zur Verfügung steht. Durch das Abschalten der Batterie vom Bordnetz würde normalerweise die Welligkeit der Generatorausgangsspannung zunehmen, da die Glättungswirkung der Batterie entfällt. Diese Glättung der Generatorspannung übernimmt nun der dynamische Energiespeicher, so dass trotz Abschaltens der Batterie eine Glättung stattfindet. Darüber hinaus stellt der dynamische Energiespeicher im Startfall zusätzliche Energie zur Verfügung, so dass entsprechend beim Startvorgang die Batterie geringer belastet wird.

In einer weiteren bevorzugten Ausführungsform ist der dynamische Energiespeicher als Kondensator, insbesondere als Supercap ausgebildet, die bei einem kompakten Aufbau eine große Kapazität aufweisen.

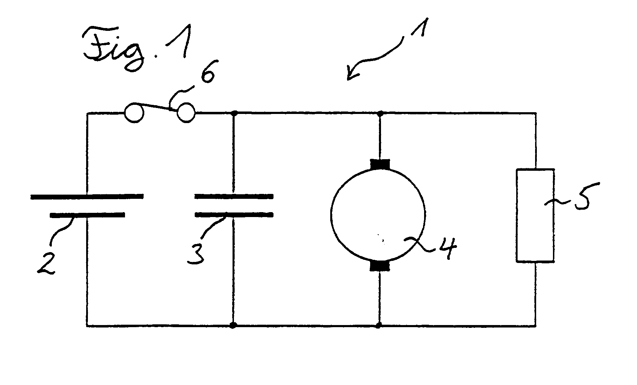

Die Erfindung wird nachfolgend anhand eines bevorzugten Ausführungsbeispiels näher erläutert. Die einzige Figur zeigt ein schematisches Schaltbild eines Bordnetzes.

Das Bordnetz 1 umfaßt eine Batterie 2, einen dynamischen Energiespeicher, einen Generator 4, elektrische Verbraucher 5 und einen Schalter 6. Die Batterie 2 ist entweder als Lithium-Ionen-Batterie oder als Bleibatterie ausgebildet. Die Batterie 2 ist bei geschlossenem Schalter 6 parallel zu dem als Kondensator ausgebildeten dynamischen Energiespeicher 3, dem Generator 4 und den elektrischen Verbrauchern 5 geschaltet.
Bei aktivem Generator 4 und nicht voll aufgeladener Batterie 2 ist der Schalter 6 geschlossen. Die Generatorausgangsspannung versorgt dann die elektrischen Verbraucher 5 mit elektrischer Energie und lädt gleichzeitig die Batterie 2 und den dynamischen Energiespeicher 3 auf, die aufgrund ihres kapazitativen Verhaltens die Generatorausgangsspannung glätten. Bei einer Ausbildung der Batterie 2 als Lithium-lonen-Batterie ist dieser einer Einrichtung zur Erfassung des Ladezustandes zugeordnet. Erfaßt die Einrichtung einen Ladezustand knapp unterhalb der Volladung, so erzeugt diese ein Steuersignal für den Schalter 6, so daß dieser geöffnet wird. Dadurch ist die Batterie vor Zerstörung geschützt. Der dynamische Energiespeicher 3 bleibt jedoch mit dem Generator 4 verbunden und wird von diesem gegebenenfalls weiter aufgeladen, wobei der dynamische Energiespeicher 3 weiter die Generatorausgangsspannung glättet. Somit wird die Zerstörung der Batterie 2 verhindert, ohne daß sich etwas an der Leistungsfähigkeit des Bordnetzes hinsichtlich der Welligkeit wesentlich ändert.

Ist die Batterie 2 als Bleibatterie ausgebildet, so ist der Zustand einer Überladung normalerweise nicht so kritisch. Allerdings ist die zulässige Ladespannung der Bleibatterie von der Betriebstemperatur abhängig, so daß im Stand der Technik die Generatorausgangsspannung über einen Temperaturregler bei höheren Betriebstemperaturen reduziert wird. Dieser Temperaturregler am Generator 4 kann nun entfallen. Hierzu wird der Bleibatterie ein Temperatursensor zugeordnet, der bei Überschreitung eines Schwellwertes den Schalter 6 öffnet. Dadurch wird wieder die Zerstörung der Batterie 2 vermieden, ohne daß die Generatorausgangsspannung reduziert werden müßte.

Der Schalter 6 kann sowohl als Leistungsschalter mit galvanischer Trennung als auch als Halbleiter-Leistungsschalter, wie beispielsweise als MOSFET, ausgebildet sein.

## Patentansprüche

1. Bordnetz für ein Kraftfahrzeug, umfassend mindestens eine Batterie, einen Generator und elektrische Verbraucher, wobei die Batterie und der Generator zueinander parallel geschaltet sind, wobei zwischen Batterie (2) und Generator (4) ein dynamischer Energiespeicher (3) parallel geschaltet ist und zwischen Batterie (2) und dynamischem Energiespeicher (3) ein steuerbarer Schalter (6) angeordnet ist,
**dadurch gekennzeichnet, dass**
der Schalter (6) bei aktivem Generator (4) in Abhängigkeit von dem Ladezustand der Batterie (2) und/oder der Betriebstemperatur betätigt wird, um die Batterie (2) vom Bordnetz (1) zu trennen.

2. Bordnetz nach Anspruch 1, **dadurch gekennzeichnet, dass** die Batterie (2) als Lithium-lonen-Batterie ausgebildet ist.

3. Bordnetz nach Anspruch 1 oder 2, **dadurch gekennzeichnet, dass** der dynamische Energiespeicher (3) als Kondensator ausgebildet ist.

4. Bordnetz nach Anspruch 3, **dadurch gekennzeichnet, dass** der Kondensator als Supercap ausgebildet ist.

5. Bordnetz nach einem der vorangegangenen Ansprüche, **dadurch gekennzeichnet, dass** der Schalter (6) als Halbleiterleistungsschalter ausgebildet ist.

## Claims

1. On-board electrical system for a motor vehicle, comprising at least a battery, a generator and electrical loads, with the battery and the generator being connected in parallel with one another, with a dynamic energy storage means (3) being connected in parallel between the battery (2) and the generator (4), and a controllable switch (6) being arranged between the battery (2) and the dynamic energy storage means (3),
**characterized in that**
the switch (6) is operated as a function of the charge state of the battery (2) and/or the operating temperature when the generator (4) is active, in order to disconnect the battery (2) from the on-board electrical system (1).

2. On-board electrical system according to Claim 1, **characterized in that** the battery (2) is in the form of a lithium-ion battery.

3. On-board electrical system according to Claim 1 or 2, **characterized in that** the dynamic energy storage means (3) is in the form of a capacitor.

4. On-board electrical system according to Claim 3, **characterized in that** the capacitor is in the form of a supercap.

5. On-board electrical system according to one of the preceding claims, **characterized in that** the switch (6) is in the form of a semiconductor power switch.

## Revendications

1. Réseau de bord pour véhicule automobile, qui comporte au moins une batterie, une génératrice et des consommateurs électriques,
la batterie et la génératrice étant raccordées en parallèle l'une à l'autre,
un accumulateur dynamique d'énergie (3) étant raccordé en parallèle entre la batterie (2) et la génératrice (4) et un commutateur asservi (6) étant disposé entre la batterie (2) et l'accumulateur dynamique d'énergie (3),
**caractérisé en ce que**
lorsque la génératrice (4) est active, le commutateur (6) est actionné en fonction de l'état de charge de la batterie (2) et/ou de sa température de fonctionnement pour séparer la batterie (2) du réseau de bord (1).

2. Réseau de bord selon la revendication 1, **caractérisé en ce que** la batterie (2) est configurée comme batterie à ions lithium.

3. Réseau de bord selon les revendications 1 ou 2, **caractérisé en ce que** l'accumulateur dynamique d'énergie (3) est configuré comme condensateur.

4. Réseau de bord selon la revendication 3, **caractérisé en ce que** le condensateur est configuré comme "supercap".

5. Réseau de bord selon l'une des revendications précédentes, **caractérisé en ce que** le commutateur (6) est configuré comme commutateur à semi-conducteur.
